# EUROPÄISCHE PATENTANMELDUNG

(11) **EP 1 387 595 A1**
(43) Veröffentlichungstag der Anmeldung: **04.02.2004**
(21) Anmeldenummer: 02016656.7
(22) Anmeldetag: 25.07.2002
(51) Int. Cl.: H04Q 7/38

(54) **Verfahren zur Funkübertragung mit Geocast-Adressierung**

(71) Anmelder: SIEMENS AKTIENGESELLSCHAFT, 80333 München (DE)
(72) Erfinder: Halfmann, Ruediger, 67697 Otterberg (DE); Li, Hui, 90489 Nürnberg (DE); Lott, Matthias, 81477 München (DE); Schulz, Egon, Dr., 80993 München (DE)

(57) **Zusammenfassung**

Die Erfindung betrifft ein Verfahren zur Funkübertragung von Informationen in einem Mobilfunkkommunikationssystem bestehend aus mindestens zwei Funkstationen, welche über eine Luftschnittstelle verbunden sind, wobei ein Adressierungsverfahren, welches geographische Informationen verwendet, eingesetzt wird. Erfindungsgemäß wird eine Adressierung von Daten mittels mindestens einer geographische Information enthaltenden Adresse auf der Sicherungsschicht (DLL) durchgeführt.

Vorteile dieses Verfahrens bestehen in einer Erhöhung der Zuverlässigkeit der Übertragung, einer Reduzierung des Signalisierungsaufwands und einer Erhöhung der Standby Zeit von Funkstationen.

## Beschreibung

Die Erfindung betrifft ein Verfahren zur Funkübertragung von Informationen in einem Mobilfunkkommunikationssystem mit den Merkmalen des Oberbegriffs des Anspruchs 1.

In Funkkommunikationssystemen werden Informationen (beispielsweise Sprache, Bildinformation, Videoinformation, SMS (Short Message Service) oder andere Daten) mit Hilfe von elektromagnetischen Wellen über eine Funkschnittstelle zwischen sendender und empfangender Funkstation übertragen. Das Abstrahlen der elektromagnetischen Wellen erfolgt dabei mit Trägerfrequenzen, die in dem für das jeweilige System vorgesehenen Frequenzband liegen.

In Funkkommunikationssystemen kommt dabei der ermöglichten Mobilität der Teilnehmer eine große Bedeutung zu. In derartigen Systemen, welche zur Funkübertragung von Informationen genutzt werden, sind mehrere Funkstationen über ein Luftschnittstelle miteinander verbunden.

Ortsbezogene Dienste (location based services), werden in zukünftigen Mobilfunksystemen eine immer wichtigere Rolle spielen. Diese Ortsinformationen können entweder durch die Auswertung der Intensität von empfangenen Signalen (Received Signal Strength, RSS) oder durch Zeitunterschiede (Time Of Arrival, TOA), oder auch mit Hilfe von satellitengestützten Systemen (Global Positioning System, GPS) zur Verfügung gestellt werden. Naheliegende Anwendungen für ortsbezogene Dienste (location based services) sind z.B. papierlose Touristenführer (virtual tourist guides), Wegesuchsysteme (path finder), Werbung (advertisments), oder Notrufe. Weitere Anwendungsgebiete, welche sich hervorragend für ortsbezogene Dienste (location based services) eignen, sind z.B. intelligente Transportsysteme (ITS), welche auf Funkkommunikation zwischen Fahrzeugen basieren, ortsbezogenes Marketing (marketing along the road) und Verkehrsinformationsdienste.

Für die Adressierung von Teilnehmerstationen in Kommunikationsnetzen, insbesondere Funkkommunikationsnetzen, sind verschiedene Verfahren bekannt. Neben dem Einzelsenderuf (Unicast), bei dem eine Sendestation genau eine andere Funkstation direkt adressiert, ist der Rundsenderuf (Broadcast), bei dem alle Funkstationen in Funkreichweite der Sendestation adressiert werden, am häufigsten vertreten. Daneben gibt es noch den Gruppensenderuf (Multicast), bei dem mehrere Funkstationen einer Multicast-Gruppe gleichzeitig mit dem Aussenden eines Multicast-Paketes adressiert werden. Zuvor muss jede Funkstation, die einen Multicast empfangen möchte, der Multicast-Gruppe beitreten, damit der Sender eines Multicast-Paketes informiert ist, welche Funkstationen die entsprechende Multicast-Nachricht empfangen wollen. Ein Multicast, bei dem alle Funkstationen in der Reichweite einer Funkstation adressiert werden, entspricht einem Broadcast.

Mit der Einführung des Internetprotokolls IPv6 ist die Adressierungsart Anycast hinzugekommen, bei der ähnlich einem Broadcast alle Funkstationen potentiell adressiert werden. Jedoch entscheidet der Empfänger, ob das Paket für ihn bestimmt war. Ist dies gegeben, so kann er darauf antworten. Die Sendestation muss hierbei nicht wissen, wer die Empfänger des Paketes sind, vielmehr verschickt sie die Nachricht "auf Verdacht" an alle Funkstationen. Die erste Funkstation, welche die Kriterien eines Empfängers erfüllt, kann der Sendestation antworten.

Neben den erwähnten Adressierungsverfahren ist neuerdings der Geocast von großer Bedeutung, insbesondere hinsichtlich seiner Anwendung in Ad-hoc-Netzen. Unter einem Ad-hoc-Netz versteht man ein drahtloses Kommunikationsnetz, welches in der Regel ohne existierende Infrastruktur wie z.B. Basisstationen betrieben wird. Im Gegensatz zu anderen mobilen Netzen wird hierbei der Verkehr über einen oder mehrere Knoten zum Ziel geroutet. Das Geocast-Adressierungsverfahren wird aber auch in anderen Mobilfunkkommunikationssystemen eingesetzt. Unter dem Geocast versteht man ein Adressierungsverfahren, bei dem eine oder mehrere Funkstationen nicht ausschließlich unter Verwendung ihrer eindeutigen Adressen, sondern mit Hilfe von geographischen Informationen adressiert werden. Der Geocast ist somit eine Variante des konventionellen Multicast, wobei die Gruppe, welche als Empfänger adressiert wird, durch geographische Information bestimmt wird. Auf Basis dieser Adressierungsart werden Routingverfahren, d.h. Verfahren zur Wegwahl, vorgeschlagen.

Das OSI-Referenzmodell (OSI: Open System Interconnection) der Internationalen Standardisierungs-organisation ISO wurde als Grundlage für die Bildung von Kommunikationsstandards entworfen. Es teilt die Netzwerkkommunikation in sieben Schichten auf, wobei jede Schicht eine andere Aufgabe erfüllt. Die Kommunikation zwischen den Teilnehmern, z.B. den Funkstationen, erfolgt also über hierarchische Protokollschichten. Die Kommunikation zwischen den verschiedenen Ebenen des Modells findet dabei in vertikaler Richtung statt, d.h. zu übertragende Daten werden von Schicht zu Schicht weitergereicht. Dabei stellt jede Schicht der darüber liegenden Schicht an sogenannten Dienstzugangspunkten (Service Access Points, SAPs) Dienste zur Verfügung. Ein Dienstzugangspunkt bezeichnet allgemein die bestimmende logische Schnittstelle zwischen angrenzenden Schichten im OSI-Referenzmodell, an dem eine übergeordnete Schicht auf die Dienste der untergeordneten zugreifen kann.

Bei der ersten (untersten) Schicht handelt es sich um die physikalische Schicht (physical layer) oder Bitübertragungsschicht. In ihr werden die nachrichtentechnischen Hilfsmittel für die Übertragung definiert.

Die darauffolgende zweite Schicht, die Sicherungsschicht (data link layer) fasst Folgen von binären Informationen zu Datenpaketen zusammen bzw. löst größere Einheiten, die von einer höheren Schicht kommen, gegebenenfalls in kleinere Datenpakete auf. Zusätzlich wird eine gewisse Redundanz in Form von Kontrollinformationen der zu übertragenden Daten in die Datenpakete eingefügt. Eine weitere Aufgabe der Sicherungsschicht ist die Medienzugangskontrolle (MAC: Media Access Control). Die Aufgabe der MAC-Teilschicht ist es, den Zugang auf das gemeinsame Medium zu koordinieren. Zur Übertragung der Daten auf den einzelnen Teilstrecken wird hier die MAC-Adresse verwendet.

Die wichtigste Aufgabe der dritten Schicht, der Vermittlungsoder Netzschicht (network layer) ist das Routing, d.h. die Bestimmung eines optimalen Weges durch ein verzweigtes Netzwerk. In dieser Schicht findet die Adressierung der Daten für die Ende-zu-Ende Verbindung mit der Netzschichtadresse statt.

Die oben beschriebenen Adressierungsverfahren werden auf der Netzschicht unterstützt, in der auch das Routing realisiert wird.

Das Geocast-Adressierungsverfahren wurde bislang folgendermaßen realisiert: kombiniert mit Routingverfahren auf der Netzschicht kommt es unter der Bezeichnung "geographisches Routing" zum Einsatz. Dabei werden neben der eindeutigen Adresse der Teilnehmerstationen ebenfalls ihre geographischen Koordinaten ausgetauscht. Auf Basis der Positionsinformation des Adressaten wird ein Paket von einer Funkstation zur nächsten Funkstation weitergeleitet, bis es die Zielstation erreicht hat. Damit wird keine Route über verschiedene Funkstationen im eigentlichen Sinn aufgebaut, über die das Paket übermittelt wird. Vielmehr werden Relais-Stationen auf dem Weg zur Zielstation spontan gewählt, je nachdem, welche Funkstation momentan am günstigsten positioniert ist. Die Relais-Stationen werden dabei nicht über ihre Adresse ausgewählt, sondern über ihre Position.

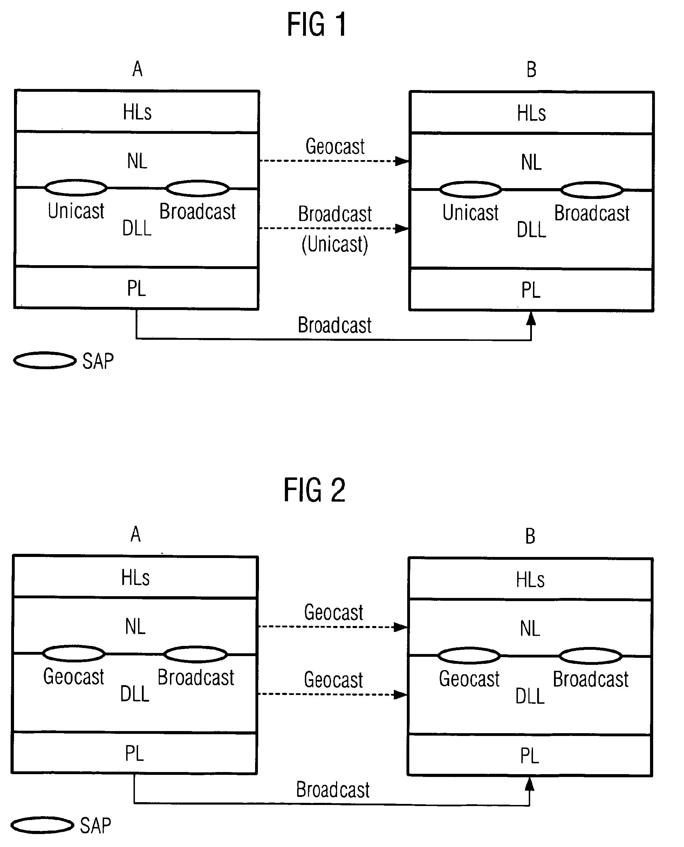

In Figur 1 ist dargestellt, wie die Adressierungsart Geocast auf der Netzschicht und der Sicherungsschicht umgesetzt wird. Die Funkstation A fungiert hierbei als Sender, die Funkstation B als Empfänger der Geocast-Nachricht. Beide Funkstationen sind gemäß dem beschriebenen OSI-Referenzmodell in die physikalische Schicht PL (Physical Layer), die Sicherungsschicht DL (Data Link Layer), die Netzschicht NL (Network Layer) und die höheren Schichten HLs (Higher Layers) gegliedert. Die beiden in Figur 1 eingezeichneten Dienstzugangspunkte SAP sind charakterisiert durch den betreffenden Dienst, welchen sie anbieten: die Broadcast- und die Unicast-Adressierung ("Broadcast" und "Unicast")

Der Geocast wird auf der Netzschicht NL unter Verwendung einer geographischen Adresse realisiert. Die Netzschicht NL hat also die Information, in welche Richtung die Daten weitergeleitet werden sollen. Auf der Sicherungsschicht DLL wird der Geocast als Unicast realisiert. D.h., es findet eine Adress-Filterung der Daten auf der Sicherungsschicht DLL statt, hier wird als MAC-Adresse diejenige Station gewählt, die als Weiterleitungsstation fungiert. Dazu muss die Netzschicht NL die aktuellen Positionen der Nachbarstationen sowie deren MAC-Adresse kennen. Dann könnte die Netzschicht NL bereits eine Vorverarbeitung der Daten durchführen und den Geocast direkt als Unicast übertragen. Die physikalische Übermittlung der Daten wird von der Physikalischen Schicht PL in Form eines Broadcastes durchgeführt.

Wenn sich jedoch die Topologie schnell ändert und die letzte Aktualisierung der Zuordnung von Adresse und Position zu lange in der Vergangenheit liegt, wird der Unicast auf veralteten Informationen realisiert und verfehlt dann sein Ziel. Im ungünstigsten Fall wird dann das Paket in die entgegengesetzte Richtung übertragen. In diesen Fällen ist ein Broadcast dem Unicast vorzuziehen, wobei lediglich die aktuelle Position der Empfänger über die geeignete Weiterleitungsstation entscheidet. D.h., es findet keine Adress-Filterung der Daten auf der Sicherungsschicht DLL statt, hier wird als MAC-Adresse eine Broadcast-Adresse verwendet. Eine Filterung findet dann beim Empfänger B auf der Netzschicht NL anhand der geographischen Adresse statt.

Durch das anhand der Figur 1 erläuterte Verfahren zur Realisierung eines Geocast durch einen Broadcast auf der Sicherungsschicht DLL werden alle Nachteile, die ein Broadcast gegenüber dem Multicast oder dem Unicast hat, auf den Geocast übertragen. Insbesondere ist hier anzuführen, dass alle potentiellen Empfänger des Geocast empfangsbereit sein müssen, was sich negativ auf den Leistungsverbrauch auswirkt und somit die Standby Zeit verkürzt. Weiterhin ist von Nachteil, dass eine verlässliche Übertragung durch die Sicherungsschicht DLL bei dem beschriebenen Geocast Verfahren schwerlich gewährleistet werden kann, so dass also insgesamt die Effizienz von Adressierung bzw. Overhead suboptimal ist.

Wird der Geocast auf der Sicherungsschicht DLL als Unicast realisiert, müssen die Informationen der Nachbarstationen in Form von Position und Adresse ständig aktualisiert werden. Dieser zusätzliche Signalisierungsaufwand kann insbesondere in hochmobilen Netzen erheblich sein. Zudem kann nicht ausgeschlossen werden, dass Stationen, die angeblich erreichbar sind, aufgrund von sich schnell ändernden Funkausbreitungsbedingungen (Mehrwegeausbreitung und/oder Abschattung und/oder Interferenzen) nicht mehr erreichbar sind. Damit wäre selbst bei korrekten Positions- und Adressinformationen der Unicast erfolglos.

Der Erfindung liegt daher die Aufgabe zugrunde, ein Verfahren der eingangs genannten Art aufzuzeigen, welches einen Geocast in effizienterer Weise umsetzt.

Diese Aufgabe wird durch das Verfahren mit den Merkmalen des Patentanspruchs 1 gelöst. Vorteilhafte Ausgestaltungen und Weiterbildungen sind Gegenstand von abhängigen Ansprüchen.

Bei dem erfindungsgemäßen Verfahren wird eine Adressierung von Daten mittels mindestens einer geographische Information enthaltenden Adresse auf der Sicherungsschicht durchgeführt.

In der Erfindung wird Bezug genommen auf die Sicherungsschicht und auch auf die Netzschicht im Hinblick auf die Funktionen, welche die gleichnamigen Schichten im ISO/OSI Referenzmodell einnehmen. Eine Beschreibung dieser Funktionen findet sich z.B. in B. Walke: Mobilfunknetze und ihre Protokolle, Band 1, 2. Auflage, 2000, Teubner GmbH, S. 64-68. Es soll jedoch betont werden, dass nicht der Name der jeweiligen Schicht maßgeblich ist, sondern ihre wesentliche Funktion. Das erfindungsgemäße Verfahren ist nicht beschränkt auf Kommunikationssysteme, die nach dem ISO/OSI Referenzmodell gegliedert sind. Vielmehr ist es auch anwendbar auf Kommunikationssysteme, deren "Sicherungsschicht" und "Netzschicht" -in Anführungszeichen, da die Schichten durchaus einen anderen Namen tragen können- nicht alle Funktionen gemäß dem ISO/OSI Referenzmodell aufweisen, sondern nur eine Teilmenge dieser Funktionen. Auch können Funktionen im Vergleich zum ISO/OSI Referenzmodell hinzugekommen sein. Entscheidend für die Anwendbarkeit des erfindungsgemäßen Verfahrens auf diese Systeme ist, dass die "Sicherungsschicht", also die Schicht, welche der kennzeichnende Teil des Anspruchs 1 beinhaltet, unter derjenigen Schicht liegt, deren Funktion die Ende-zu-Ende Adressierung ist ("Netzschicht").

Ein wesentlicher Vorteil des erfindungsgemäßen Verfahrens besteht darin, dass aufgrund des auf der Sicherungsschicht verringerten Empfängerkreises eine zuverlässige Übertragung durch die Sicherungsschicht gewährleistet werden kann. Auch der anfallende Signalisierungsaufwand wird gegenüber dem herkömmlichen Geocast reduziert. Dies ist insbesondere dann der Fall, wenn die geographische Zielregion deutlich kleiner als diejenige Region ist, welche den Broadcast empfängt.

Da nur diejenigen Funkstationen Daten empfangen, die sich in der geographischen Zielregion aufhalten, kann die Standby Zeit durch Leistungseinsparungen bei denjenigen Funkstationen erhöht werden, die sich nicht in der geographischen Zielregion aufhalten. Dies ist insbesondere bei Ad-hoc-Netzen von Bedeutung.

Weiterhin besteht der Vorteil bei dynamischen Topologien darin, dass neue Nachbarstationen, die der Senderstation bisher nicht bekannt waren, als Empfänger genutzt werden können. Somit kann ohne langwierige und Overhead produzierende Signalisierung eine Datenübertragung zwischen Funkstationen in Funkreichweite realisiert werden. Selbst wenn die MAC-Adressen der Nachbarn nicht bekannt sind, können die Daten zielgerichtet und schnell weitergeleitet werden. Es ist somit für diesen Dienst weder die Kenntnis der MAC-Adresse noch der Position des Empfängers auf der Sicherungsschicht notwendig.

In Weiterbildung der Erfindung wird die mindestens eine geographische Information enthaltende Adresse auf der Sicherungsschicht als einzige Adresse auf dieser Schicht oder zusätzlich zu einer anderen Adresse ohne geographische Information verwendet. Bei letzteren Adressen kann es sich um die herkömmlichen MAC-Adressen (z.B. MAC-Broadcast, MAC-Unicast, usw.) handeln. Ersetzt die geographische Information enthaltende Adresse auf der Sicherungsschicht die MAC-Adresse, so kann man daher von einer neuen Art von MAC-Adresse sprechen: der MAC-Geocast-Adresse.

Vorzugsweise wird die Adressierung von Daten mittels der mindestens einen geographische Information enthaltenden Adresse auf der Sicherungsschicht in den für die Medienzugriffssteuerung (Medium Access Control, MAC) vorgesehenen Datenelementen realisiert.

In einer Ausgestaltung der Erfindung fordert die Netzschicht von der Sicherungsschicht als Dienst eine geographisch gerichtete Übertragung an, wobei als Parameter die geographische Information übergeben wird.

Die geographische Information, welche auf der Sicherungsschicht zur Adressierung verwendet wird, umfasst Ortskoordinaten von Adressaten und/oder Winkelinformation und/oder Radiusinformation und/oder Winkelbereiche bezogen auf ein Referenzkoordinatensystem. Die Position eines Empfängers kann also z.B. durch Richtung und Radius festgelegt werden, es ist aber auch die Angabe eines Winkelbereichs zur Adressierung aller Funkstationen in diesem Bereich möglich. Ortskoordinaten können z.B. mit Hilfen von GPS auf der Netzschicht bereitgestellt werden.

Die auf der Sicherungsschicht verwendete geographische Adresse stimmt vorzugsweise mit mindestens einer geographische Information enthaltenden Adresse, welche für die entsprechende Übertragung auch auf der Netzschicht zum Einsatz kommen, überein. Dies hat den Vorteil, dass das Overhead-Volumen gering gehalten wird.

In Weiterbildung der Erfindung handelt es sich bei der auf der Sicherungsschicht verwendeten geographischen Adresse um eine für die Sicherungsschicht spezifische Adresse, welche nicht mit denjenigen geographische Informationen enthaltenden Adressen in der Netzschicht für die betreffende Übertragung übereinstimmt. Lediglich die Adressierte Fläche bzw. das Gebiet stimmt genau oder weitestgehend überein. Dadurch kann die strenge Schichtkonstruktion des Kommunikationssystems gegebenenfalls gemäß dem ISO/OSI-Referenzmodell aufrechterhalten werden. Auch eine Abhängigkeit der Art der auf der Sicherungsschicht verwendeten geographischen Adressen von der Zeit, von den verschiedenen Übertragungen oder von den verschiedenen Funkstationen ist möglich.

In einer bevorzugten Ausführungsform der Erfindung wird ein ARQ (Automatic Repeat Request) Verfahren eingesetzt. Dies erhöht die Zuverlässigkeit der Übermittlung deutlich. Besonders dann, wenn Daten über mehrere Funkstationen weitergeleitet werden, ist es vorteilhaft, eine Garantie zu erhalten, dass die Daten von der bzw. den Relais-Stationen auch tatsächlich übermittelt wurden. Zur Realisierung gibt es verschiedene Möglichkeiten: das Verfahren kann entweder über positive Empfangsbestätigungen (Acknowledgement, ACK) oder über negative Empfangsbestätigungen (Negative Acknowlgedgement, NAK) arbeiten.

Einzelheiten und Details der Erfindung werden anhand eines Ausführungsbeispiels im folgenden erläutert. Dabei zeigen
- Fig. 1: Protokollstruktur zu einer Funkkommunikation mit Geocast-Adressierung nach dem Stand der Technik,
- Fig. 2: Protokollstruktur zu einer Funkkommunikation mit Geocast-Adressierung gemäß der Erfindung.

Figur 1 betrifft eine Funkübertragung unter Verwendung eines Geocast-Adressierungsverfahrens zwischen zwei Funkstationen, wie bereits oben ausgeführt.

Figur 2 zeigt zwei Funkstationen A und B charakterisiert durch ihre Schichtstruktur mit der physikalischen Schicht PL, der Sicherungsschicht DLL, der Netzschicht NL und den höheren Schichten HLs. Figur 1 und Figur 2 haben einige Gemeinsamkeiten, so z.B. der grundsätzliche Aufbau der Protokollschichten. Daher wird an dieser Stelle schwerpunktmäßig auf die Unterschiede eingegangen. Es sollen Daten von A nach B unter Verwendung des erfindungsgemäßen Geocast Verfahrens übertragen werden. Da die Sicherungsschicht diese Adressierungsart unterstützt, ist in Figur 2 ein Dienstzugangspunkt SAP mit der Bezeichnung "Geocast" eingezeichnet. Er existiert zusätzlich zu den bereits bekannten Dienstzugangspunkten für die anderen Adressierungsverfahren. Im Gegensatz zur herkömmlichen Realisierung des Geocast -wie beispielsweise in Figur 1 dargestellt- entspricht die logische Verbindung zwischen den Sicherungsschichten DLL der beiden Funkstationen A und B einem Geocast. In anderen Worten heißt dies, dass in der Empfängerstation B auf der Sicherungsschicht DLL eine Filterung nach der sicherungsschicht-spezifischen geographischen Adresse durchgeführt wird, und somit nur die gefilterten Daten zur Netzschicht NL durchgelassen werden.

Als Anwendung des Verfahrens besteht die Möglichkeit, bei einem Geocast mehrere Funkstationen in einem Gebiet gleichzeitig zu adressieren. Diese Funkstationen müssen im allgemeinen durch gemeinsame geographische Informationen beschreibbar sein. Außer einer gemeinsamen Region kann dies auch ein gemeinsamer Winkelsektor sein, d.h., die adressierten Funkstationen können sich sehr unterschiedlich weit vom Empfänger entfernt befinden. Dies ist z.B. dann von Interesse, wenn Fahrzeuge auf der Autobahn darüber informiert werden sollen, dass vor ihnen ein Stau existiert. In diesem Fall werden alle Fahrzeuge entgegen der Fahrtrichtung durch einen Stauteilnehmer informiert. Damit dieser Geocast effizient weitergeleitet werden kann, wird der Geocast auf der Sicherungsschicht ebenfalls als Geocast realisiert, wobei durch Bekanntgabe der Funkzielstation die entsprechenden Funkstation empfangsbereit sind.

In Kombination mit Sektorantennen bzw. adaptiven Antennen kann zudem die Sendeleistung gerichtet ausgestrahlt werden. Dies hat den großen Vorteil, dass im Vergleich zum Broadcast unerwünschte Interferenzen reduziert werden. Das erfindungsgemäße Verfahren erleichtert die Umsetzung der gerichteten Ausstrahlung durch die Antennen dadurch, dass unter Verwendung der geographischen Adresse der Sicherungsschicht eine effektivere Ansteuerung der Antennen der physikalischen Schicht ermöglicht wird. Es findet also eine direkte Interaktion zwischen der MAC-Schicht (zweite Schicht) und der Antennensteuerung (erste Schicht) statt. Weiterhin können so gezielt Sektoren mit unterschiedlicher Richtung angesteuert werden. Z.B. könnte eine Nachricht für die Fahrzeug-zu-Fahrzeug-Kommunikation nach vorne und gleichzeitig nach hinten entlang einer Strasse übertragen werden.

Eine weitere Ausführung betrifft das Mediumzugriffsverfahren. Durch die geographische Adressierung auf der Sicherungsschicht kann eine Empfangsstation eine räumliche Relation zwischen der sie aktuell charakterisierenden geographischen Information und der in der Zieladresse enthaltenen geographischen Information berechnen. Im Bezug auf die Ortskoordinaten könnte dies bedeuten, dass ermittelt wird, wie dicht sich die Empfängerstation an der gewünschten geographischen Zielposition befindet. Hierzu findet eine Ermittlung des Abstandes zwischen ihrer aktuellen geographischen Position und der Zielposition statt. Je näher diese Funkstation der Zielposition ist, um so eher sollte sie dem Sender eine positive Quittung (Acknowledgement) mitteilen, dass sie die Daten empfangen und an ihre Netzschicht weitergereicht hat. Werden die Funkstationen z.B. über einen Winkelbereich in einem Koordinatensystem adressiert, so sollte diejenige Empfängerstation am schnellsten eine positive Empfangsquittung zurückschicken, welche sich am weitesten von der Senderstation entfernt aufhält und am dichtesten an der Winkelhalbierende platziert ist. Zur Ermittlung der räumlichen Relationen können entsprechende Algorithmen eingesetzt werden.

## Patentansprüche

1. Verfahren zur Funkübertragung von Informationen in einem Mobilfunkkommunikationssystem bestehend aus mindestens zwei Funkstationen, welche über eine Luftschnittstelle verbunden sind, wobei die Kommunikation über hierarchische Protokollschichten erfolgt und wobei ein Adressierungsverfahren, welches geographische Informationen verwendet, eingesetzt wird, **dadurch gekennzeichnet,**
**dass** eine Adressierung von Daten mittels mindestens einer geographische Information enthaltenden Adresse auf der Sicherungsschicht (DLL) durchgeführt wird.

2. Verfahren nach Anspruch 1, **dadurch gekennzeichnet,**
**dass** die mindestens eine geographische Information enthaltende Adresse auf der Sicherungsschicht (DLL) als einzige Adresse auf dieser Schicht oder zusätzlich zu einer Adresse ohne geographische Information verwendet wird.

3. Verfahren nach einem der Ansprüche 1 bis 2,
**dadurch gekennzeichnet,**
**dass** die Adressierung von Daten mittels der mindestens einen geographische Information enthaltenden Adresse auf der Sicherungsschicht (DLL) in den für die Medienzugriffssteuerung vorgesehenen Datenelementen realisiert wird.

4. Verfahren nach einem der Ansprüche 1 bis 3,
**dadurch gekennzeichnet,**
**dass** die Netzschicht (NL) als Dienst eine geographisch gerichtete Übertragung von der Sicherungsschicht (DLL) anfordert, wobei als Parameter die geographische Information übergeben wird.

5. Verfahren nach einem der Ansprüche 1 bis 4,
**dadurch gekennzeichnet,**
**dass** die geographische Information Ortskoordinaten und/oder Winkel und/oder Radien und/oder Winkelbereiche bezogen auf ein Referenzkoordinatensystem umfasst.

6. Verfahren nach einem der Ansprüche 1 bis 5,
**dadurch gekennzeichnet,**
**dass** die mindestens eine geographische Information enthaltende Adresse auf der Sicherungsschicht (DLL) mit mindestens einer geographische Information enthaltenden Adresse auf der Netzschicht (NL) bei der selben Übertragung übereinstimmt.

7. Verfahren nach einem der Ansprüche 1 bis 5,
**dadurch gekennzeichnet,**
**dass** die mindestens eine geographische Information enthaltende Adresse auf der Sicherungsschicht (DLL) sich von der mindestens einen geographische Information enthaltenden Adresse auf der Netzschicht (NL) bei der selben Übertragung unterscheidet.

8. Verfahren nach einem der Ansprüche 1 bis 7,
**dadurch gekennzeichnet,**
**dass** ein ARQ (Automatic Repeat Request) Verfahren eingesetzt wird.

9. Verfahren nach einem der Ansprüche 1 bis 8,
**dadurch gekennzeichnet,**
**dass** mehrere Funkstationen, deren geographische Positionen durch gemeinsame geographische Information beschreibbar ist, gleichzeitig von einer Funkstation adressiert werden.

10. Verfahren nach einem der Ansprüche 1 bis 9,
**dadurch gekennzeichnet,**
**dass** Sektor- und/oder adaptive Antennen eingesetzt werden.

11. Verfahren nach einem der Ansprüche 1 bis 10,
**dadurch gekennzeichnet,**
**dass** in mindestens einer Funkstation eine räumlichen Relation zwischen der diese mindestens eine Funkstation aktuell charakterisierenden geographischen Information und der in der mindestens einen geographische Information enthaltenden Adresse verwendeten geographischen Information durchgeführt wird.
